# EUROPEAN PATENT APPLICATION

(11) **EP 4 800 073 A1**
(43) Date of publication of application: **02.09.2026**
(21) Application number: 25724227.1
(22) Date of filing: 10.02.2025
(51) Int. Cl.: C08L 75/04, C08L 77/00, C08K 3/36, A41D 31/102, A41D 19/00, B32B 5/02, B32B 27/12, B32B 27/18, B32B 27/40, B32B 27/08, C08J 5/18, B32B 7/12

(54) **WATERPROOF AND COLDPROOF BREATHABLE WINTER GLOVE AND PREPARATION METHOD THEREFOR**

(30) Priority: 08.02.2025 CN 202510141479
(71) Applicant: Nantong Qiangsheng New Material Technology Co., Ltd, Nantong, Jiangsu 226499 (CN)
(72) Inventor: SHA, Yan, Nantong, Jiangsu 226499 (CN); SHA, Xiaolin, Nantong, Jiangsu 226499 (CN)
(74) Representative: Plavsa, Olga
(86) International application number: PCT/CN2025/076615
(87) International publication number: WO 2026/045120

(57) **Abstract**

The present invention provides a waterproof, cold-resistant, and breathable winter glove and a preparation method thereof. The glove comprises an inner lining layer of the glove, a highly elastic, waterproof and breathable membrane layer, and an outer shell layer of the glove arranged in sequence from inside to outside of the glove. The membrane employed comprises the following components: 60-99 parts by weight of TPU particles, 0.1-30 parts by weight of PA particles, and 0.1-10 parts by weight of additives, wherein the additive is at least one additive selected from titanium dioxide, silicon dioxide, silicon carbide, graphene powders, and aluminum oxide. The highly elastic, waterproof and breathable membrane, having good moisture permeability and waterproofness as well as high strength and elasticity, could be introduced into the glove as an immediate layer. The prepared glove has balanced breathability and waterproofness.

## Description

### TECHNICAL FIELD

The present invention relates to the technical field of protective equipment, and more particularly to a waterproof, cold-resistant and breathable winter glove and a preparation method thereof.

### BACKGROUND

The temperature is usually low in winter. When the temperature is low, especially in bad whether such as rain and snow, or in harsh environments such as underwater scenarios, it is indispensable to keep hands warm when a person works outdoor. However, the existed waterproof and warm gloves have one of the following defects: (1) they induce feeling of sultriness to user's hands or even induce them to sweat after long term wear and use; (2) they induce feeling of coldness to user's hands because the rainwater or snow-water could still permeate into the interior of the gloves after the user, wearing and using the gloves, works outdoor for a long time.

Therefore, there is an urgent need to develop a waterproof, cold-resistant, and breathable glove for outdoor work that balances breathability and waterproofness.

### SUMMARY

To address the shortcomings of prior art, the present invention aims to provide a waterproof, cold-resistant and breathable winter glove and a preparation method thereof.

The objectives of the present invention are achieved through the following technical solutions.

In a first aspect, the invention provides a highly elastic, waterproof and breathable membrane, comprising the following components: 60-99 parts by weight of TPU particles, 0.1-30 parts by weight of PA particles, and 0.1-10 parts by weight of additives; wherein the additive is at least one additive selected from the group consisting of titanium dioxide, silicon dioxide, silicon carbide, graphene powders, and aluminum oxide.

In a preferred embodiment, the highly elastic, waterproof and breathable membrane comprises the following components: 85-98 parts by weight of TPU particles, 1-12 parts by weight of PA particles, and 1-5 parts by weight of additives.

In a second aspect, the invention provides a method for preparing the highly elastic, waterproof and breathable membrane, comprising the following steps of: homogenously mixing the TPU particles, PA particles, and additives under a slow stirring; then, completely melting and mixing the obtained mixture; and subjecting the molten mixture obtained to a film blowing process to obtain the highly elastic, waterproof and breathable membrane.

In a preferred embodiment, the melting and mixing is conducted at a melting temperature of 150-220°C.

In a third aspect, the invention provides use of the highly elastic, waterproof and breathable membrane in the preparation of waterproof, cold-resistant and breathable winter gloves.

In a fourth aspect, the invention provides a waterproof, cold-resistant and breathable winter glove, comprising: an inner lining layer of the glove, a highly elastic, waterproof and breathable membrane layer, and an outer shell layer of the glove, wherein they are arranged in sequence from inside to outside of the glove.

In a preferred embodiment, the inner lining layer of the glove is a knitted inner lining layer. More preferably, the inner lining layer of the glove is an inner lining layer made of brushed and knitted fabric.

In a preferred embodiment, the outer shell layer of the glove is a latex-impregnated and knitted outer shell layer.

In a preferred embodiment, the fibers used in the knitted inner lining layer and the latex-impregnated and knitted outer shell layer are independently filaments of any one fiber selected from the group consisting of nylon, polyester, viscose, polyethylene, aramid, and cotton, or blended yarns made of two or more fibers selected from the group consisting of nylon, polyester, viscose, polyethylene, aramid, and cotton.

The latex-impregnated and knitted outer shell layer is obtained by weaving the fibers using a knitting process to obtain a knitted outer shell, impregnating the palm portion of the knitted outer shell in a latex, and baking the impregnated outer shell. The latex employed in the impregnating is at least one latex selected from the group consisting of nitrile rubber, PU, natural latex, PVC, silicone rubber, and neoprene.

Both the knitted inner lining layer and latex-impregnated and knitted outer shell layer employed in the present invention are prepared by conventional methods without specific limitations herein.

In a fifth aspect, the invention provides a method for preparing the waterproof, cold-resistant and breathable winter glove, comprising the following steps of:
A1. paving two layers of the highly elastic, waterproof and breathable membranes, and laminating them, obtaining a glove-shaped, highly elastic, waterproof and breathable membrane layer;
A2. sliding the inner lining layer of the glove onto a glove-compounding mold at first; then, subjecting the inner lining layer of the glove to an adhesive dispensing process; subsequently, sliding the glove-shaped, highly elastic, waterproof and breathable membrane layer onto the outside of the inner lining layer of the glove, and subjecting the highly elastic, waterproof and breathable membrane layer to an adhesive dispensing process; and, subsequently, sliding the latex-impregnated outer shell layer of the glove onto the outside of the highly elastic, waterproof and breathable membrane layer;
A3. baking the glove slid together to melt the adhesive dots, and, thereby, adhesively bonding the inner lining layer of the glove, the highly elastic, waterproof and breathable membrane layer, and the outer shell layer of the glove together; and, finally, stitching the edges of the wrist portion of the glove to obtain the waterproof, cold-resistant and breathable winter glove.

In a preferred embodiment, in the step A3, the baking temperature is 80-150°C, and the baking time is 10-30 minutes.

Compared with the prior art, the present invention exhibits the following advantageous effects.

The highly elastic, waterproof and breathable membrane of the present application is prepared by TPU particles, PA particles and additives, and thus has good moisture permeability and waterproofness as well as high strength and elasticity. The highly elastic, waterproof and breathable membrane of the present application could be introduced into the glove as an immediate layer. The prepared waterproof, cold-resistant and breathable winter glove has balanced breathability and waterproofness.

### DETAILED DESCRIPTION OF EMBODIMENTS

Unless otherwise defined, the technical terms or scientific terms used in this specification and claims shall have the ordinary meaning understood by those of ordinary skill in the art to which the present application belongs. All numerical values recited herein as between the lowest value and the highest value are intended to mean all values obtained in increments of one unit between the lowest value and the highest value when there is a difference of more than two units between the lowest value and the highest value.

Specific embodiments of the present application will be described hereinbelow. It should be noted that, in describing these embodiments, for brevity and clarity, it is impossible to detailly describe all the features of the practical embodiments. Without departing from the spirit and scope of this application, those skilled in the art may make modifications and adaptations to the embodiments of the application. Such derived embodiments shall also fall within the protection scope of this application.

To obtain a waterproof, cold-resistant and breathable winter glove with balanced breathability and waterproofness, the present invention tried to introduce a waterproof and breathable membrane into the glove, to obtain the breathability and waterproofness. However, when the waterproof and breathable membrane is introduced into the glove, the glove should also meet the requirements for both strength and elasticity. Otherwise, the intermediate membrane layer is readily ruptured during use of the glove. In view of the above, the present invention has developed a highly elastic, waterproof and breathable membrane, and introduced it into the glove as an intermediate layer. The glove has achieved good breathability and waterproofness as well as high strength and high elasticity, thereby preventing the problem that the glove is readily ruptured.

### Examples

The examples of the present application will now be described in detail as below. These examples are implemented based on the technical solutions of the present application, and the detailed embodiments and operating procedures are disclosed. However, the protection scope of this application shall not be construed as being limited to the examples described below.

In the following examples and comparative examples: TPU particles were purchased from Bayer, and the model thereof is Desmopan 5080A; PA particles were purchased from DuPont USA, and the model thereof is PA6-73G45L; ABS particles were purchased from Dongguan Nabaichuan Plastic Co., Ltd., wherein the model thereof is NBCSH, and the particle size thereof is 1-5 µm; silicon dioxide powders were purchased from Xuzhou Yingtuo New Materials Co., Ltd., and the particle size thereof is 1-5 µm; silicon oxide powders were purchased from Jinan Chenghecheng New Materials Co., Ltd., and the particle size thereof is 2-8 µm; titanium dioxide powders were purchased from Foshan Jinlinda Chemical Co., Ltd., wherein the model thereof is R-6618(T), and the particle size thereof is 1-5 µm; and graphene powders were purchased from Changzhou Sixth Element Co., Ltd., and the particle size thereof is 3-10 µm.

All the devices employed in the detailed embodiments of the present invention are conventional ones used for the manufacture of gloves, and all the raw materials employed are prepared by conventional methods or commercially available. They are not specifically limited in the present invention. Both the inner lining layer of the glove and the outer shell layer of the glove are prepared by conventional methods or commercially available, and they are not specifically limited in the present invention.

### Example 1

This Example provides a waterproof, cold-resistant and breathable winter glove, comprising an inner lining layer of the glove, a highly elastic, waterproof and breathable membrane layer, and an outer shell layer of the glove. They are arranged in sequence from inside to outside of the glove. A preparation method of the glove comprises the following steps of:
1) preparing the highly elastic, waterproof and breathable membrane: 95 parts by weight of TPU particles, 4 parts by weight of PA particles, and 1 part by weight of silicon dioxide powders were homogenously mixed under a slow stirring; the mixture was completely molten and mixed at a melting temperature of 180°C; the molten mixture obtained was subsequently fed into a film-blowing machine to produce a highly elastic, waterproof and breathable membrane with a thickness of 0.025 mm.
2) preparing a glove-shaped, highly elastic, waterproof and breathable membrane layer: a mold was made, wherein the sizes of the mold were determined by those of the glove; then, two layers of the highly elastic, waterproof and breathable membranes were paved and subsequently laminated by a high-frequency heat sealing machine, obtaining the glove-shaped, highly elastic, waterproof and breathable membrane layer.
3) preparing the inner lining layer of the glove: polyester filaments were weaved by a knitting process, and subsequently treated by a raising machine, obtaining an inner lining layer of the glove made of brushed and knitted fabric.
4) preparing the outer shell layer of the glove: polyester filaments were weaved into a knitted outer shell by a knitting process; then, the palm portion of the knitted outer shell was impregnated in a nitrile latex and subsequently baked, obtaining an outer shell layer of the glove which was latex-impregnated and knitted.
5) preparing the glove: firstly, a layer of the inner lining layer of the glove prepared in the step 3) was slid onto a glove-compounding mold; an adhesive dispenser was placed on the inner lining layer of the glove and used to dispense adhesives thereto; then, the glove-shaped, highly elastic, waterproof and breathable membrane layer prepared in the step 2) was slid onto the outside of the inner lining layer of the glove; an adhesive dispenser was placed on the waterproof and breathable membrane and used to dispense adhesives thereto; subsequently, the outer shell layer of the glove prepared in the step 4) was slid onto the outside of the highly elastic, waterproof and breathable membrane layer; as such, the three layers were slid together, and subsequently baked at 100°C for 20 minutes in an oven to melt the adhesive dots on both surfaces of the highly elastic, waterproof and breathable membrane, thereby adhesively bonding the inner lining layer of the glove, the highly elastic, waterproof and breathable membrane layer, and the outer shell layer of the glove together; finally, the edges of the wrist portion of the glove was stitched to obtain the waterproof, cold-resistant and breathable winter glove.

### Example 2

The present Example provides a waterproof, cold-resistant and breathable winter glove, comprising an inner lining layer of the glove, a highly elastic, waterproof and breathable membrane layer, and an outer shell layer of the glove. They are arranged in sequence from inside to outside of the glove. A preparation method of the glove comprises the following steps of:
1) preparing the highly elastic, waterproof and breathable membrane: 98 parts by weight of TPU particles, 1 part by weight of PA particles, and 1 part by weight of silicon carbide powders were homogenously mixed under a slow stirring; the mixture was completely molten and mixed at a melting temperature of 150°C; the molten mixture obtained was subsequently fed into a film-blowing machine to produce a highly elastic, waterproof and breathable membrane with a thickness of 0.025 mm.
2) preparing a glove-shaped, highly elastic, waterproof and breathable membrane layer: a mold was made, wherein the sizes of the mold were determined by those of the glove; then, two layers of the highly elastic, waterproof and breathable membranes were paved and subsequently laminated by a high-frequency heat sealing machine, obtaining the glove-shaped, highly elastic, waterproof and breathable membrane layer.
3) preparing the inner lining layer of the glove: polyester filaments were weaved by a knitting process, and subsequently treated by a raising machine, obtaining an inner lining layer of the glove made of brushed and knitted fabric.
4) preparing the outer shell layer of the glove: polyester filaments were weaved into a knitted outer shell by a knitting process; then, the palm portion of the knitted outer shell was impregnated in a nitrile latex and subsequently baked, obtaining an outer shell layer of the glove which was latex-impregnated and knitted.
5) preparing the glove: firstly, a layer of the inner lining layer of the glove prepared in the step 3) was slid onto a glove-compounding mold; an adhesive dispenser was placed on the inner lining layer of the glove and used to dispense adhesives thereto; then, the glove-shaped, highly elastic, waterproof and breathable membrane layer prepared in the step 2) was slid onto the outside of the inner lining layer of the glove; an adhesive dispenser was placed on the waterproof and breathable membrane and used to dispense adhesives thereto; subsequently, the outer shell layer of the glove prepared in the step 4) was slid onto the outside of the highly elastic, waterproof and breathable membrane layer; as such, the three layers were slid together, and subsequently baked at 80°C for 30 minutes in an oven to melt the adhesive dots on both surfaces of the highly elastic, waterproof and breathable membrane, thereby adhesively bonding the inner lining of the glove, the waterproof membrane, and the outer shell together; finally, the edges of the wrist portion of the glove was stitched to obtain the waterproof, cold-resistant and breathable winter glove.

### Example 3

This Example provides a waterproof, cold-resistant and breathable winter glove, comprising an inner lining layer of the glove, a highly elastic, waterproof and breathable membrane layer, and an outer shell layer of the glove. They are arranged in sequence from inside to outside of the glove. A preparation method of the glove comprises the following steps of:
1) preparing the highly elastic, waterproof and breathable membrane: 90 parts by weight of TPU particles, 8 parts by weight of PA particles, and 2 parts by weight of silicon carbide powders were homogenously mixed under a slow stirring; the mixture was completely molten and mixed at a melting temperature of 220°C; the molten mixture obtained was subsequently fed into a film-blowing machine to produce a highly elastic, waterproof and breathable membrane with a thickness of 0.025 mm.
2) preparing a glove-shaped, highly elastic, waterproof and breathable membrane layer: a mold was made, wherein the sizes of the mold were determined by those of the glove; then, two layers of the highly elastic, waterproof and breathable membranes were paved and subsequently laminated by a high-frequency heat sealing machine, obtaining the glove-shaped, highly elastic, waterproof and breathable membrane layer.
3) preparing the inner lining layer of the glove: polyester filaments were weaved by a knitting process, and subsequently treated by a raising machine, obtaining an inner lining layer of the glove made of brushed and knitted fabric.
4) preparing the outer shell layer of the glove: polyester filaments were weaved into a knitted outer shell by a knitting process; then, the palm portion of the knitted outer shell was impregnated in a nitrile latex and subsequently baked, obtaining an outer shell layer of the glove which was latex-impregnated and knitted.
5) preparing the glove: firstly, a layer of the inner lining layer of the glove prepared in the step 3) was slid onto a glove-compounding mold; an adhesive dispenser was placed on the inner lining layer of the glove and used to dispense adhesives thereto; then, the glove-shaped, highly elastic, waterproof and breathable membrane layer prepared in the step 2) was slid onto the outside of the inner lining layer of the glove; an adhesive dispenser was placed on the waterproof and breathable membrane and used to dispense adhesives thereto; subsequently, the outer shell layer of the glove prepared in the step 4) was slid onto the outside of the highly elastic, waterproof and breathable membrane layer; as such, the three layers were slid together, and subsequently baked at 150°C for 10 minutes in an oven to melt the adhesive dots on both surfaces of the highly elastic, waterproof and breathable membrane, thereby adhesively bonding the inner lining of the glove, the waterproof membrane, and the outer shell together; finally, the edges of the wrist portion of the glove was stitched to obtain the waterproof, cold-resistant and breathable winter glove.

### Example 4

This Example provides a waterproof, cold-resistant and breathable winter glove, comprising an inner lining layer of the glove, a highly elastic, waterproof and breathable membrane layer, and an outer shell layer of the glove. They are arranged in sequence from inside to outside of the glove. A preparation method of the glove comprises the following steps of:
1) preparing the highly elastic, waterproof and breathable membrane: 90 parts by weight of TPU particles, 5 parts by weight of PA particles, and 5 parts by weight of silicon carbide powders were homogenously mixed under a slow stirring; the mixture was completely molten and mixed at a melting temperature of 180°C; the molten mixture obtained was subsequently fed into a film-blowing machine to produce a highly elastic, waterproof and breathable membrane with a thickness of 0.025 mm.
2) preparing a glove-shaped, highly elastic, waterproof and breathable membrane layer: a mold was made, wherein the sizes of the mold were determined by those of the glove; then, two layers of the highly elastic, waterproof and breathable membranes were paved and subsequently laminated by a high-frequency heat sealing machine, obtaining the glove-shaped, highly elastic, waterproof and breathable membrane layer.
3) preparing the inner lining layer of the glove: polyester filaments were weaved by a knitting process, and subsequently treated by a raising machine, obtaining an inner lining layer of the glove made of brushed and knitted fabric.
4) preparing the outer shell layer of the glove: polyester filaments were weaved into a knitted outer shell by a knitting process; then, the palm portion of the knitted outer shell was impregnated in a nitrile latex and subsequently baked, obtaining an outer shell layer of the glove which was latex-impregnated and knitted.
5) preparing the glove: firstly, a layer of the inner lining layer of the glove prepared in the step 3) was slid onto a glove-compounding mold; an adhesive dispenser was placed on the inner lining layer of the glove and used to dispense adhesives thereto; then, the glove-shaped, highly elastic, waterproof and breathable membrane layer prepared in the step 2) was slid onto the outside of the inner lining layer of the glove; an adhesive dispenser was placed on the waterproof and breathable membrane and used to dispense adhesives thereto; subsequently, the outer shell layer of the glove prepared in the step 4) was slid onto the outside of the highly elastic, waterproof and breathable membrane layer; as such, the three layers were slid together, and subsequently baked at 80°C for 30 minutes in an oven to melt the adhesive dots on both surfaces of the highly elastic, waterproof and breathable membrane, thereby adhesively bonding the inner lining of the glove, the waterproof membrane, and the outer shell together; finally, the edges of the wrist portion of the glove was stitched to obtain the waterproof, cold-resistant and breathable winter glove.

### Example 5

This Example provides a waterproof, cold-resistant and breathable winter glove, comprising an inner lining layer of the glove, a highly elastic, waterproof and breathable membrane layer, and an outer shell layer of the glove. They are arranged in sequence from inside to outside of the glove. A preparation method of the glove comprises the following steps of:
1) preparing the highly elastic, waterproof and breathable membrane: 85 parts by weight of TPU particles, 10 parts by weight of PA particles, and 5 parts by weight of silicon dioxide powders were homogenously mixed under a slow stirring; the mixture was completely molten and mixed at a melting temperature of 150°C; the molten mixture obtained was subsequently fed into a film-blowing machine to produce a highly elastic, waterproof and breathable membrane with a thickness of 0.025 mm.
2) preparing a glove-shaped, highly elastic, waterproof and breathable membrane layer: a mold was made, wherein the sizes of the mold were determined by those of the glove; then, two layers of the highly elastic, waterproof and breathable membranes were paved and subsequently laminated by a high-frequency heat sealing machine, obtaining the glove-shaped, highly elastic, waterproof and breathable membrane layer.
3) preparing the inner lining layer of the glove: polyester filaments were weaved by a knitting process, and subsequently treated by a raising machine, obtaining an inner lining layer of the glove made of brushed and knitted fabric.
4) preparing the outer shell layer of the glove: polyester filaments were weaved into a knitted outer shell by a knitting process; then, the palm portion of the knitted outer shell was impregnated in a nitrile latex and subsequently baked, obtaining an outer shell layer of the glove which was latex-impregnated and knitted.
5) preparing the glove: firstly, a layer of the inner lining layer of the glove prepared in the step 3) was slid onto a glove-compounding mold; an adhesive dispenser was placed on the inner lining layer of the glove and used to dispense adhesives thereto; then, the glove-shaped, highly elastic, waterproof and breathable membrane layer prepared in the step 2) was slid onto the outside of the inner lining layer of the glove; an adhesive dispenser was placed on the waterproof and breathable membrane and used to dispense adhesives thereto; subsequently, the outer shell layer of the glove prepared in the step 4) was slid onto the outside of the highly elastic, waterproof and breathable membrane layer; as such, the three layers were slid together, and subsequently baked at 90°C for 25 minutes in an oven to melt the adhesive dots on both surfaces of the highly elastic, waterproof and breathable membrane, thereby adhesively bonding the inner lining of the glove, the waterproof membrane, and the outer shell together; finally, the edges of the wrist portion of the glove was stitched to obtain the waterproof, cold-resistant and breathable winter glove.

### Example 6

The present Example provides a waterproof, cold-resistant and breathable winter glove, comprising an inner lining layer of the glove, a highly elastic, waterproof and breathable membrane layer, and an outer shell layer of the glove. They are arranged in sequence from inside to outside of the glove. A preparation method of the glove comprises the following steps of:
1) preparing the highly elastic, waterproof and breathable membrane: 85 parts by weight of TPU particles, 12 parts by weight of PA particles, and 3 parts by weight of silicon dioxide powders were homogenously mixed under a slow stirring; the mixture was completely molten and mixed at a melting temperature of 150°C; the molten mixture obtained was subsequently fed into a film-blowing machine to produce a highly elastic, waterproof and breathable membrane with a thickness of 0.025 mm.
2) preparing a glove-shaped, highly elastic, waterproof and breathable membrane layer: a mold was made, wherein the sizes of the mold were determined by those of the glove; then, two layers of the highly elastic, waterproof and breathable membranes were paved and subsequently laminated by a high-frequency heat sealing machine, obtaining the glove-shaped, highly elastic, waterproof and breathable membrane layer.
3) preparing the inner lining layer of the glove: polyester filaments were weaved by a knitting process, and subsequently treated by a raising machine, obtaining an inner lining layer of the glove made of brushed and knitted fabric.
4) preparing the outer shell layer of the glove: polyester filaments were weaved into a knitted outer shell by a knitting process; then, the palm portion of the knitted outer shell was impregnated in a nitrile latex and subsequently baked, obtaining an outer shell layer of the glove which was latex-impregnated and knitted.
5) preparing the glove: firstly, a layer of the inner lining layer of the glove prepared in the step 3) was slid onto a glove-compounding mold; an adhesive dispenser was placed on the inner lining layer of the glove and used to dispense adhesives thereto; then, the glove-shaped, highly elastic, waterproof and breathable membrane layer prepared in the step 2) was slid onto the outside of the inner lining layer of the glove; an adhesive dispenser was placed on the waterproof and breathable membrane and used to dispense adhesives thereto; subsequently, the outer shell layer of the glove prepared in the step 4) was slid onto the outside of the highly elastic, waterproof and breathable membrane layer; as such, the three layers were slid together, and subsequently baked at 120°C for 15 minutes in an oven to melt the adhesive dots on both surfaces of the highly elastic, waterproof and breathable membrane, thereby adhesively bonding the inner lining of the glove, the waterproof membrane, and the outer shell together; finally, the edges of the wrist portion of the glove was stitched to obtain the waterproof, cold-resistant and breathable winter glove.

### Example 7

The present Example provides a waterproof, cold-resistant and breathable winter glove, comprising an inner lining layer of the glove, a highly elastic, waterproof and breathable membrane layer, and an outer shell layer of the glove. They are arranged in sequence from inside to outside of the glove. The preparation method of the glove in the present example is essentially the same as that in example 3. The difference merely lied in that the method comprised: 1) preparing the highly elastic, waterproof and breathable membrane: 70 parts by weight of TPU particles, 20 parts by weight of PA particles, and 10 parts by weight of silicon carbide powders were homogenously mixed under a slow stirring; the mixture was completely molten and mixed at a melting temperature of 220°C; the molten mixture obtained was subsequently fed into a film-blowing machine to produce a highly elastic, waterproof and breathable membrane with a thickness of 0.025 mm.

### Example 8

The present Example provides a waterproof, cold-resistant and breathable winter glove, comprising an inner lining layer of the glove, a highly elastic, waterproof and breathable membrane layer, and an outer shell layer of the glove. They are arranged in sequence from inside to outside of the glove. The preparation method of the glove in the present example is essentially the same as that in example 6. The difference merely lied in that the method comprised: 1) preparing the highly elastic, waterproof and breathable membrane: 75 parts by weight of TPU particles, 15 parts by weight of PA particles, and 10 parts by weight of silicon dioxide powders were homogenously mixed under a slow stirring; the mixture was completely molten and mixed at a melting temperature of 150°C; the molten mixture obtained was subsequently fed into a film-blowing machine to produce a highly elastic, waterproof and breathable membrane with a thickness of 0.025 mm.

### Example 9

This Example provides a waterproof, cold-resistant and breathable winter glove, comprising an inner lining layer of the glove, a highly elastic, waterproof and breathable membrane layer, and an outer shell layer of the glove. They are arranged in sequence from inside to outside of the glove. The preparation method of the glove in the present example is essentially the same as that in example 5. The difference merely lied in that the method comprised: 1) preparing the highly elastic, waterproof and breathable membrane: 85 parts by weight of TPU particles, 5 parts by weight of PA particles, and 10 parts by weight of silicon dioxide powders were homogenously mixed under a slow stirring; the mixture was completely molten and mixed at a melting temperature of 150°C; the molten mixture obtained was subsequently fed into a film-blowing machine to produce a highly elastic, waterproof and breathable membrane with a thickness of 0.025 mm.

### Example 10

This Example provides a waterproof, cold-resistant and breathable winter glove, comprising an inner lining layer of the glove, a highly elastic, waterproof and breathable membrane layer, and an outer shell layer of the glove. They are arranged in sequence from inside to outside of the glove. The preparation method of the glove in the present example is essentially the same as that in example 5. The difference merely lied in that the method comprised: 1) preparing the highly elastic, waterproof and breathable membrane: 80 parts by weight of TPU particles, 15 parts by weight of PA particles, and 5 parts by weight of silicon dioxide powders were homogenously mixed under a slow stirring; the mixture was completely molten and mixed at a melting temperature of 150°C; the molten mixture obtained was subsequently fed into a film-blowing machine to produce a highly elastic, waterproof and breathable membrane with a thickness of 0.025 mm.

### Example 11

The present Example provides a waterproof, cold-resistant and breathable winter glove, comprising an inner lining layer of the glove, a highly elastic, waterproof and breathable membrane layer, and an outer shell layer of the glove. They are arranged in sequence from inside to outside of the glove. The preparation method of the glove in the present example is essentially the same as that in example 2. The difference merely lied in that the method comprised: 1) preparing the highly elastic, waterproof and breathable membrane: 98 parts by weight of TPU particles, 1 part by weight of PA particles, and 1 part by weight of titanium dioxide powders were homogenously mixed under a slow stirring; the mixture was completely molten and mixed at a melting temperature of 150°C; the molten mixture obtained was subsequently fed into a film-blowing machine to produce a highly elastic, waterproof and breathable membrane with a thickness of 0.025 mm.

### Example 12

The present Example provides a waterproof, cold-resistant and breathable winter glove, comprising an inner lining layer of the glove, a highly elastic, waterproof and breathable membrane layer, and an outer shell layer of the glove. They are arranged in sequence from inside to outside of the glove. The preparation method of the glove in the present example is essentially the same as that in example 2. The difference merely lied in that the method comprised: 1) preparing the highly elastic, waterproof and breathable membrane: 98 parts by weight of TPU particles, 1 part by weight of PA particles, and 1 part by weight of graphene powders were homogenously mixed under a slow stirring; the mixture was completely molten and mixed at a melting temperature of 150°C; the molten mixture obtained was subsequently fed into a film-blowing machine to produce a highly elastic, waterproof and breathable membrane with a thickness of 0.025 mm.

### Comparative Example 1

This Comparative Example provides a waterproof, cold-resistant and breathable winter glove, comprising an inner lining layer of the glove, a highly elastic, waterproof and breathable membrane layer, and an outer shell layer of the glove. They are arranged in sequence from inside to outside of the glove. The preparation method of the glove in the present example is essentially the same as that in example 6. The difference merely lied in that the method comprised: 1) preparing the highly elastic, waterproof and breathable membrane: 85 parts by weight of TPU particles, and 15 parts by weight of PA particles were homogenously mixed under a slow stirring; the mixture was completely molten and mixed at a melting temperature of 150°C; the molten mixture obtained was subsequently fed into a film-blowing machine to produce a highly elastic, waterproof and breathable membrane with a thickness of 0.025 mm.

### Comparative Example 2

This Comparative Example provides a waterproof, cold-resistant and breathable winter glove, comprising an inner lining layer of the glove, a highly elastic, waterproof and breathable membrane layer, and an outer shell layer of the glove. They are arranged in sequence from inside to outside of the glove. The preparation method of the glove in the present example is essentially the same as that in example 4. The difference merely lied in that the method comprised: 1) preparing the highly elastic, waterproof and breathable membrane: 90 parts by weight of TPU particles, and 10 parts by weight of silicon carbide powders were homogenously mixed under a slow stirring; the mixture was completely molten and mixed at a melting temperature of 180°C; the molten mixture obtained was subsequently fed into a film-blowing machine to produce a highly elastic, waterproof and breathable membrane with a thickness of 0.025 mm.

### Comparative Example 3

This Comparative Example provides a waterproof, cold-resistant and breathable winter glove, comprising an inner lining layer of the glove, a highly elastic, waterproof and breathable membrane layer, and an outer shell layer of the glove. They are arranged in sequence from inside to outside of the glove. The preparation method of the glove in the present example is essentially the same as that in example 6. The difference merely lied in that the method comprised: 1) preparing the highly elastic, waterproof and breathable membrane: 85 parts by weight of TPU particles, 12 parts by weight of PBS particles, and 3 parts by weight of silicon dioxide powders were homogenously mixed under a slow stirring; the mixture was completely molten and mixed at a melting temperature of 150°C; the molten mixture obtained was subsequently fed into a film-blowing machine to produce a highly elastic, waterproof and breathable membrane with a thickness of 0.025 mm.

### Performance Evaluation

The moisture permeabilities, strengths, and elasticities of the highly elastic, waterproof and breathable membranes prepared in step 1) of the all the Examples and comparative Examples were evaluated. The waterproofness of the gloves prepared in the Examples and Comparative Examples were evaluated. In particular, the moisture permeability was tested following the method disclosed in ASTM E96 BW2000, the strength and the elongation at break were tested following the methods disclosed in ASTM D882, and the waterproof property was tested following the method disclosed in EN 511:2006. The test results are shown in Table 1.

**Table 1**

| | Moisture permeability (g/m²•24h) | Strength (MPa) | Elongation at break (%) | Waterproofness (waterproof rating) |
|---|---|---|---|---|
| Example 1 | 6528 | 48 | 539 | level 3 |
| Example 2 | 5863 | 44 | 510 | level 3 |
| Example 3 | 5579 | 46 | 473 | level 3 |
| Example 4 | 5515 | 42 | 457 | level 3 |
| Example 5 | 5372 | 43 | 423 | level 2 |
| Example 6 | 5341 | 45 | 436 | level 2 |
| Example 7 | 5037 | 44 | 371 | level 1 |
| Example 8 | 5196 | 43 | 398 | level 1 |
| Example 9 | 5177 | 35 | 415 | level 2 |
| Example 10 | 5225 | 39 | 402 | level 2 |
| Example 11 | 5563 | 40 | 464 | level 3 |
| Example 12 | 5464 | 41 | 471 | level 3 |
| Comparative Example 1 | 5326 | 32 | 416 | level 1 |
| Comparative Example 2 | 5288 | 25 | 443 | level 2 |
| Comparative Example 3 | 4939 | 40 | 402 | level 2 |

It can be seen from the results as shown in Table 1 that, for the highly elastic, waterproof and breathable membranes prepared in Examples 1-6 and 9-12, the moisture permeability results thereof are from 5,177 g/m²·24h to 6,528 g/m²·24h, the strengths thereof are from 35 MPa to 48 MPa, and the elongations at break thereof are from 402% to 539%. In addition, for the gloves prepared therefrom, the waterproofness thereof are from level 2 to level 3. In particular, for the highly elastic, waterproof and breathable membranes prepared in Examples 1-4 and 11-12, the moisture permeability results thereof are from 5,464 g/m²·24h to 6,528 g/m²·24h, the strengths thereof are from 40 MPa to 48 MPa, and the elongations at break thereof are from 4457% to 539%. In addition, for the gloves prepared therefrom, the waterproofness thereof is level 3, exhibiting superior results.

In addition, comparing the results of Example 2 with those of Examples 11-12, it can be seen that, when silicon carbide powders are employed as the additive, the prepared highly elastic, waterproof and breathable membrane exhibits superior moisture permeability, strength and elongation at break to those prepared by titanium dioxide powders or graphene powders. This demonstrates that it achieves better results when silicon carbide powders are employed as the additives.

Comparing the results of Example 3 with those of Example 7 as well as the results of Example 6 and Example 8, it can be seen that, when the content of the TPU particles employed is too low or the content of the additive is too high, the prepared highly elastic, waterproof and breathable membranes have significantly degraded moisture permeabilities and elongations at break. The prepared glove has degraded waterproofness as well.

Comparing the results of Example 5 and Example 9, it can be seen that, when the content of the additive is too high, the prepared highly elastic, waterproof and breathable membranes have significantly degraded moisture permeabilities and strengths.

Comparing the results of Example 5 and Example 10, it can be seen that, when the content of the PA is too high, the prepared highly elastic, waterproof and breathable membranes have variously degraded moisture permeabilities, strengths and elongations at break.

Comparing the results of Example 6 and Comparative Example 1, it can be seen that, when the silicon dioxide is not introduced as the additive, the prepared highly elastic, waterproof and breathable membranes have variously degraded moisture permeabilities, strengths and elongations at break. The prepared glove has degraded waterproofness as well.

Comparing the results of Example 4 and Comparative Example 2, it can be seen that, when the PA particles are not added, the prepared highly elastic, waterproof and breathable membranes have significantly degraded moisture permeabilities, strengths and elongations at break. The prepared glove has degraded waterproofness as well.

Comparing the results of Example 6 and Comparative Example 1, it can be seen that, when the PA particles are replaced with ABS particles, the prepared highly elastic, waterproof and breathable membranes have variously degraded moisture permeabilities, strengths and elongations at break.

The above description of the embodiments is for the convenience of a person skilled in the art to understand and implement the present invention. Those skilled in the art can readily make various modifications to these embodiments and apply the general principles described herein to other embodiments without the need for creative efforts. Therefore, the present invention is not limited to the above embodiments, and any improvements and modifications made by those skilled in the art based on the disclosure of the present invention without departing from the scope of the present invention should fall within the scope of protection of the present invention.

## Claims

1. A highly elastic, waterproof and breathable membrane, comprising the following components: 60-99 parts by weight of TPU particles, 0.1-30 parts by weight of PA particles, and 0.1-10 parts by weight of additives;
wherein the additive is at least one additive selected from the group consisting of titanium dioxide, silicon dioxide, silicon carbide, graphene powders, and aluminum oxide.

2. The highly elastic, waterproof and breathable membrane according to claim 1, wherein the membrane comprises the following components: 85-98 parts by weight of TPU particles, 1-12 parts by weight of PA particles, and 1-5 parts by weight of additives.

3. A method for preparing the highly elastic, waterproof and breathable membrane according to claim 1, comprising the following steps of: homogenously mixing the TPU particles, PA particles, and additives under a slow stirring; then, completely melting and mixing the obtained mixture; and subjecting the molten mixture obtained to a film blowing process to obtain the highly elastic, waterproof and breathable membrane.

4. The method for preparing the highly elastic, waterproof and breathable membrane according to claim 3, wherein the melting and mixing is conducted at a melting temperature of 150-220°C.

5. Use of the highly elastic, waterproof and breathable membrane according to claims 1 or 2 in the preparation of a waterproof, cold-resistant and breathable winter glove.

6. A waterproof, cold-resistant and breathable winter glove, comprising: an inner lining layer of the glove, a highly elastic, waterproof and breathable membrane layer as described in claims 1 or 2, and an outer shell layer of the glove, wherein they are arranged in sequence from inside to outside of the glove.

7. The waterproof, cold-resistant and breathable winter glove according to claim 6, wherein the inner lining layer of the glove is a knitted inner lining layer;
wherein the outer shell layer of the glove is a latex-impregnated and knitted outer shell layer.

8. The waterproof, cold-resistant and breathable winter glove according to claim 7, wherein the fibers used in the knitted inner lining layer and the latex-impregnated and knitted outer shell layer are independently filaments of any one fiber selected from the group consisting of nylon, polyester, viscose, polyethylene, aramid, and cotton, or blended yarns made of two or more fibers selected from the group consisting of nylon, polyester, viscose, polyethylene, aramid, and cotton;
wherein the latex-impregnated and knitted outer shell layer is obtained by weaving the fibers using a knitting process to obtain a knitted outer shell, impregnating the palm portion of the knitted outer shell in a latex, and baking the impregnated outer shell;
wherein the latex employed in the impregnating is at least one latex selected from the group consisting of nitrile rubber, PU, natural latex, PVC, silicone rubber, and neoprene.

9. A method for preparing the waterproof, cold-resistant and breathable winter glove according to any one of claims 6-8, comprising the following steps of:
A1. paving two layers of the highly elastic, waterproof and breathable membranes, and laminating them, obtaining a glove-shaped, highly elastic, waterproof and breathable membrane layer;
A2. sliding the inner lining layer of the glove onto a glove-compounding mold at first; then subjecting the inner lining layer of the glove to an adhesive dispensing process; subsequently, sliding the glove-shaped, highly elastic, waterproof and breathable membrane layer onto the outside of the inner lining layer of the glove, and subjecting the highly elastic, waterproof and breathable membrane layer to an adhesive dispensing process; and, subsequently, sliding the latex-impregnated and knitted outer shell layer of the glove onto the outside of the highly elastic, waterproof and breathable membrane layer;
A3. baking the glove slid together to melt the adhesive dots, and, thereby, adhesively bonding the inner lining layer of the glove, the highly elastic, waterproof and breathable membrane layer, and the outer shell layer of the glove together; and, finally, stitching the edges of the wrist portion of the glove to obtain the waterproof, cold-resistant and breathable winter glove.

10. The method for preparing the waterproof, cold-resistant and breathable winter glove according to claim 9, wherein in the step A3, the baking temperature is 80-150°C, and the baking time is for 10-30 minutes.
